# EUROPÄISCHE PATENTSCHRIFT

(11) **EP 1 730 616 B1**
(45) Veröffentlichungstag und Bekanntmachung des Hinweises auf die Patenterteilung: **29.05.2019**
(21) Anmeldenummer: 05717123.3
(22) Anmeldetag: 22.03.2005
(51) Int. Cl.: G05D 1/02

(54) **FLÄCHENBEARBEITUNGSSYSTEM**
SURFACE TREATING SYSTEM
SYSTÈME DE TRAITEMENT DE SURFACES

(30) Priorität: 22.03.2004 DE 102004014273
(43) Veröffentlichungstag der Anmeldung: 13.12.2006
(73) Patentinhaber: BSH Hausgeräte GmbH, 81739 München (DE)
(72) Erfinder: SPIELMANNLEITNER, Markus, 73479 Ellwangen (DE); DAMRATH, Joachim, 89429 Bachhagel (DE); WETZL, Gerhard, 89567 Sontheim (DE)
(86) Internationale Anmeldenummer: PCT/EP2005/051317
(87) Internationale Veröffentlichungsnummer: WO 2005/093537

(56) Entgegenhaltungen:
- EP-A2- 1 921 523
- WO-A-2004/006034
- WO-A-2004/025947
- DE-A1- 3 806 224
- GB-A- 2 277 152
- US-A- 5 165 064
- US-A- 5 491 670
- US-A- 5 652 593
- US-A1- 2003 142 587
- US-B1- 6 327 219

## Beschreibung

Die Erfindung betrifft ein Flächenbearbeitungssystem gemäß dem Oberbegriff des Anspruchs 1.

Aus DE 102 31 391 A1 ist ein Bodenbearbeitungssystem bekannt, das eine selbstfahrende und selbststeuernde Bodenbearbeitungseinheit aufweist. Die Bodenbearbeitungseinheit umfasst ein elektrisch angetriebenes Bodenbearbeitungs-Aggregat sowie eine wiederaufladbare Energieversorgungseinheit. Eine elektrische Steuerung weist eine Sendevorrichtung zum Aussenden einer infraroten Zielstrahlung auf, wobei die Zielstrahlung von einer Empfangsvorrichtung der Bodenbearbeitungseinheit richtungsabhängig erfassbar ist. Sie dient zum selbsttätigen Ausrichten und Positionieren der Bodenbearbeitungseinheit an der Ladestation. Damit die zentrale Ladestation von der Bodenbearbeitungseinheit zuverlässig angesteuert werden kann, weist die Sendevorrichtung eine erste Sendeeinheit zur Ausbildung eines Fernfeldes der Zielstrahlung und eine zweite Sendeeinheit zur Ausbildung eines Nahfeldes der Zielstrahlung auf. Nachteilig ist es jedoch, dass die dortige Zielstrahl-Sendevorrichtung ausschließlich dazu geeignet ist, die selbstfahrende und selbststeuernde Bodenbearbeitungseinheit zu der Ladestation zurück finden zu lassen. Im übrigen erfolgt die Navigation der selbstfahrenden und selbststeuernden Bodenbearbeitungseinheit nach einem Zufallsprinzip.

Aus EP 1 921 523 A2 ist eine Vorrichtung bekannt, die einen Roboter sowie eine Basisstation umfasst, welche es dem Roboter ermöglicht, unabhängig von einer Position der Basisstation, diese zu finden und zum Aufladen seines Energiespeichers daran anzudocken. Dazu weist die Basisstation eine Vielzahl von Signalemittern auf, die Signale zur Steuerung eines Betriebszustandes und einer Position des Roboters senden können. Die Vorrichtung zur Steuerung ist so eingerichtet, dass unerwünschte Kollisionen des Roboters mit Gegenständen sowie der Basisstation vermieden werden können. Dabei erfolgt das Andocken des Roboters an die Basisstation innerhalb eines Korridors, der von zwei sich überlagernden Signalen der Signalemitter der Basisstation gebildet wird. Aufgabe der Erfindung ist es die Navigation eines Mobilteils zu verbessern. Für ein freifahrendes Gerät wird eine technische Lösung vorgeschlagen, die eine sinnvolle Bahnplanung in vorzugsweise haushaltstypischer Umgebung ermöglicht. Ziel ist es, mit vergleichsweise einfachen Mitteln dem Gerät Daten über seine Position im Raum zur Verfügung zu stellen, so dass hierauf eine gezielte Bahnplanung erfolgen kann. Das Gerät kann vorzugsweise ein selbstfahrendes Flächenreinigungsgerät, wie ein Saugroboter, ein Feuchtreinigungsroboter, ein Wischroboter, ein Polierroboter oder ein Fenster- bzw. Fliesenreinigungsroboter sein.

Diese Aufgabe wird bei einem gattungsgemäßen Flächenbearbeitungssystem dadurch gelöst, dass die ausgesendeten Signale den Flächenabschnitten entsprechend kodiert sind, und die vom Mobilteil empfangenen kodierten Signale Eingangsgrößen einer Auswerteinheit zur Bestimmung der Position des Mobilteils in der Fläche sind. Dabei kann ein einziger Signalsender zum Senden des Signals ausgebildet sein, das in Abhängigkeit einer einstellbaren Senderichtung unterschiedlich kodiert wird. Synchronisiert zu einem Drehwinkel sendet eine einzige Sendediode in Abhängigkeit ihrer bevorzugten Abstrahlrichtung ein diesem Winkelsegment zugeordnet kodiertes Signal. Das Signal kann beispielsweise pulskodiert sein. Diese Variante der Erfindung eignet sich vorzugsweise für eine Unterteilung in sehr feine Winkelsegmente. Der Signalsender kann zum im wesentlichen gleichmäßigen Senden über seinen Betriebswinkel ausgebildet sein, wobei zum Einstellen der Senderichtung dem Signalsender ein über den Betriebswinkel schwenkbaren bzw. drehbarer Abblendkörper zugeordnet ist.

Vorzugsweise sind die ausgesendeten Signale in Abhängigkeit ihrer Senderichtung kodiert. Die ausgesendeten Signale können zum Unterteilen der Fläche in Kreissektoren kodiert sein. Dabei sendet beispielsweise eine fest installierte Basisstation ein insbesondere kontinuierlich gesendeten Leitstrahl aus, der ein winkelkodiertes Signal abstrahlt. Der Leitstrahl kann einen Fläche über einen vollen 360° Bereich oder nur über einen Kreissektor z.B. 180° abdecken. Je nach erforderlicher bzw. gewünschter Auflösung für die Positionsbestimmung erfolgt die Winkelkodierung derart, dass der abgedeckte Winkelbereich in eine Anzahl von Teilkreissektoren unterteilt wird. In jedem Teilkreissektor sendet der Leitstrahl ein unterschiedlich kodiertes Signal aus. Der Leitstrahl kann beispielsweise durch unterschiedliche Pulsfolgen des ausgesandten Signals kodiert sein. In üblichen Wohnräumen ergibt sich für die erfindungsgemäßen Flächenbearbeitungssysteme eine ausreichend genaue Positionsbestimmung des Mobilteils, wenn die ausgesendeten Signale zum Unterteilen der Fläche in Kreissektoren mit einem Winkel zwischen 20° und 0,1° kodiert sind. Generell ist es sinnvoll, wenn alle Kreissektoren über die selbe Winkelgröße kodiert sind. Je nach Anwendungsfall kann es jedoch auch sinnvoll sein, wenn die Fläche in bestimmten Flächenbereichen mit feineren und in bestimmten Flächenbereichen mit gröberen Winkelgrößen kodiert sind. Die Art der Kodierung und die Wahl der Auflösung richtet sich nach dem technischem aufwand und den Mindesterfordernissen für eine sinnvolle Navigation.

Der mindestens eine Signalsender kann entweder zum frequenz- oder amplitudenmodulierten oder digitalkodierten Senden ausgebildet sein. Das frei fahrbare Mobilteil empfängt dabei ein von dem Basisteil ausgesendetes Signal und dekodiert dieses, um denjenigen Kreissektor zu identifizieren, in dem sich das Mobilteil derzeit befindet. Der identifizierte Kreissektor hat seinen Ursprung im Sendepunkt am Basisteil, es wird also stets eine zum Basisteil bezogene Position des Mobilteils ermittelt. Bei durchschnittlichen Ansprüchen an die Navigation kann mit der erfindungsgemäßen Winkelkodierung alleine bereits eine Steuerung des Mobilteils erfolgen, in dem die zu bearbeitende Fläche kreissektorweise vom Mobilteil abgearbeitet wird.

Bei einer technisch einfachen Variante der Erfindung können mehrere Signalsender zum Senden verschieden kodierter Signale in unterschiedliche Richtungen vorgesehen sein. Dabei sind beispielsweise mehrere Sendedioden vorgesehen, wobei jede Sendediode in eine andere Richtung sendet. Jede Sendediode sendet ein unterschiedlich kodiertes Signal ab. Zur Abgrenzung der einzelnen Sendedioden und zur Vermeidung von Überlappungsbereichen zweier unterschiedlich kodierter Signale kann ein im Querschnitt sternförmig ausgebildeter Formkörper vorgesehen sein, wobei in jeder Kreissegmentzelle des Formkörpers eine Sendediode angeordnet ist. Diese Variante der Erfindung eignet sich vorzugsweise für eine Unterteilung in relativ grobe Winkelsegmente.

Vorzugsweise besitzt der Signalsender dabei Richtcharakteristik und ist zum Einstellen der Senderichtung schwenkbar um einen Betriebswinkel am Basisteil gelagert.

Der Signalsender kann zum im wesentlichen gleichmäßigen Senden über seinen Betriebswinkel ausgebildet, wobei zum Einstellen der Senderichtung dem Signalsender ein über den Betriebswinkel schwenkbarer bzw. drehbarer Reflektor oder ein Spiegel zugeordnet ist.

Der Abblendkörper ist vorzugsweise als ein den Signalsender im wesentlichen signalundurchlässig umgebender Hohlkörper ausgebildet und weist zum Aussenden eines Signals in einen Kreissektor einen signaldurchlässigen Durchtritt auf.

Der Zeitgeber kann zur Durchführung einer Laufzeitmessung durch das vom Lichtsignal-Empfänger empfangene Lichtsignal auslösbar und durch das vom Schallsignal-Empfänger empfangene Schallsignal anhaltbar sein und der auf Grundlage der gemessenen Laufzeit bestimmte Abstand von Mobilteil und Basisteil eine Eingangsgröße bildet, die einer Steuerungseinheit für die Antriebsmittel des Mobilteils zuführbar ist.

Vorzugsweise sind der mindestens eine Lichtsignal-Sender und der mindestens eine Schallsignal-Sender zum zeitgleichen Starten des Aussendens ihre Signale ansteuerbar. Es kann jedoch auch der mindestens eine Lichtsignal-Sender und der mindestens eine Schallsignal-Sender zum zeitversetzten Starten des Aussendens ihrer Signale in einem vorgegebenen Zeitabstand ansteuerbar sein. Ein solcher vorzugsweise geringer Zeitversatz ist möglich, wenn der Zeitversatz zwischen Schall- und Lichtsignal vorgegeben wird. Der Zeitversatz muss dann bei der Auswertung der Zeitdifferenz d. h. bei der Bestimmung der Schall-Laufzeit berücksichtigt werden. Ein Zeitversatz kann erzeugt werden, in dem das Schallsignal nach dem Lichtsignal abgegeben wird oder umgekehrt das Lichtsignal in einem festen Zeitabstand nach dem Schallsignal abgegeben wird. In einer bevorzugten Ausführungsform werden das Schall- und das Lichtsignal gleichzeitig abgesandt. Dadurch ist eine schnellstmögliche Messung und damit eine schnelle Abstandsbestimmung möglich, wodurch die Beweglichkeit bzw. die Fahrgeschwindigkeit und Reaktionsgeschwindigkeit des Mobilteils erhöht wird.

In einer bevorzugten Grundfunktion sind der mindestens eine Lichtsignal-Sender und der mindestens eine Schallsignal-Sender an dem Basisteil und die zugeordneten Lichtsignal- und Schallsignal-Empfänger am Mobilteil vorgesehen. Dabei sendet das Basisteil ein erstes Signal aus, das sich mit Lichtgeschwindigkeit ausbreitet, wie z.B. Licht im sichtbaren oder im Infrarot-Bereich bzw. elektromagnetische Strahlung wie Funkwellen, und ein zweites Signal aus, das sich mit Schallgeschwindigkeit ausbreitet, wie z.B. Ultraschall im nichthörbaren Schallbereich. Die Verwendung von Licht im Infrarot-Bereich und Schall im Ultraschall-Bereich hat den Vorteil, dass das Flächenbearbeitungssystem optisch nicht wahrnehmbar und nicht hörbar arbeitet, was zu geringen Störungen der im Raum anwesenden Personen führt.

Vorzugsweise sind der mindestens eine Lichtsignal-Sender und der mindestens eine Schallsignal-Sender an dem Mobilteil und die zugeordneten Lichtsignal- und Schallsignal-Empfänger am Basisteil vorgesehen. Der Signalempfänger kann als einteiliges Bauteil ausgebildet sein, dass sowohl einen Schall- als auch einen Licht- Signalsensor aufweist. In einer für freifahrende Haushaltsgeräte bevorzugte technische Ausgestaltung ist als Lichtsignal-Sender eine Infrarot-Sendediode vorgesehen und als Schallsignal-Sender ist vorzugsweise ein Piezosummer für den Ultraschallbereich vorgesehen. Neben dieser kostengünstigen technischen Ausführung ist weiterhin von Vorteil, dass sowohl das Schallsignal, als auch das Lichtsignal von einem Benutzer nicht wahrnehmbar ist.

In einer ersten Variante des erfindungsgemäßen Flächenbearbeitungssystems weist das Basisteil einen Schallsignal-Sender und das Mobilteil zum Empfang des ausgesendeten einen Schallsignals mindestens zwei in Abstand voneinander am Mobilteil angeordnete Schallsignal-Empfänger auf. Die zwei Schallsignal-Empfänger sind so weit voneinander entfernt positioniert, dass ein signifikanter Laufzeitunterschied des Schallsignals ausgewertet werden kann. Bei den regelmäßig im Haushalt anzutreffenden Raumgrößen und damit zu erwartenden Abständen zwischen Basisteil und Mobilteil kann eine ausreichend genaue Messung bereits bei Abständen unter 40 cm zwischen den beiden Schallsignal-Empfängern realisiert werden.

Alternativ kann das Mobilteil einen Schallsignal-Sender aufweisen und das Basisteil zum Empfang des ausgesendeten einen Schallsignals mindestens zwei in Abstand voneinander am Basisteil angeordnete Schallsignal-Empfänger aufweisen. Die Auswertung der Schall-Laufzeit kann dabei in dem Basisteil erfolgen und die ausgewerteten Daten werden beispielsweise über eine Funkverbindung auf das Mobilteil übertragen.

In den soeben beschriebenen beiden alternativen ersten Varianten ist das Mobilteil in der Lage seinen Abstand relativ zum Basisteil zu bestimmen. Hiermit ist eine Verbesserung der Fahrstrategie in der Weise möglich, dass beispielsweise das Mobilteil in vorbestimmten Abständen (Radien) um das Basisteil herumfährt. Zunehmend können die Abstände bzw. die Radien vorzugsweise kontinuierlich erweitert oder verkürzt werden, so das ein Fahrweg in Form einer Spirale vom Mobilteil abgefahren wird.

In einer erweiterten Variante ist das Basisteil des Flächenbearbeitungssystems zum Aussenden vorzugsweise unterschiedlicher Schallsignale ausgebildet und weist mindestens zwei in Abstand voneinander am Basisteil angeordnete Schallsignal-Sender auf, wobei das Mobilteil zum Empfangen der mindestens zwei unterschiedlichen Schallsignale einen Schallsignal-Empfänger aufweist. Mit dieser Anordnung ist die Position des Mobilteils relativ zum Basisteil bestimmbar. Ein Abstand der beiden Schallsignal-Sender von ca. 40 cm hat sich als ausreichend erwiesen, um eine hinreichend genaue Auswertung der Signalabstände zu erreichen. Um Doppeldeutigkeiten bei der Signalauswertung zu vermeiden, kann feststellbar sein, welches Signal den Empfänger zuerst erreicht. Dazu weist der Schallsignal-Empfänger bzw. die nachgeschaltete Auswerteinheit beispielsweise einen Signaldifferenzierer auf, der die vom ersten und zweiten Schallsignal-Sender ausgesendeten beiden Signale zu unterscheiden vermag.

Diese Ausgestaltungen der Abstandsmessung können mit den Varianten des kodierten Sendens zum Aufteilen der zu bearbeitenden Fläche in Teilflächen dadurch kombiniert sein, dass das Mobilteil des Flächenbearbeitungssystems zum Aussenden unterschiedlicher Schallsignale ausgebildet ist. Die Schallsignal-Sender können Schallsignale in unterschiedlichen Frequenzen, in unterschiedlicher Zeitabfolge oder in codierter Weise aussenden. Ein zeitlicher Abstand beider Signale kann beispielsweise deutlich größer als die üblichen Laufzeiten der Schallsignale zur Abstandsmessung sein.

Alternativ oder ergänzend kann das Flächenbearbeitungssystem bzw. die Abstandsbestimmungsvorrichtung eine Kalibriereinrichtung zur Bestimmung der Schallgeschwindigkeit aufweisen. Bei dieser Lösung sind gesonderte oder teure Sensoren entbehrlich.

Dabei kann die Kalibriereinrichtung zur Bestimmung der tatsächlichen Schallgeschwindigkeit auf Grundlage eines vorgegebenen Abstands von Schallsignal-Sender und Schallsignal-Empfänger in einer Parkposition des Mobilteils am Basisteil eine Messung der Schall-Laufzeit durchführen.

Vorzugsweise ist der Kalibriereinrichtung zur Überprüfung der Funktion von Schallsignal-Sender und Schallsignal-Empfänger eine Bewertungseinheit zugeordnet, welche die auf Grundlage der Schall-Laufzeitmessung bestimmte Schallgeschwindigkeit im Vergleich mit einem vorgegebenen Schallgeschwindigkeitsbereich bewertet.

Die oben beschriebenen Kalibriereinrichtungen können vorzugsweise eine Abstandsmessung dann durchführen, wenn das Mobilteil am Basisteil angedockt ist, d. h. wenn sich das Mobilteil zum Aufladen der Batterien bzw. Akkumulatoren oder zum Entleeren seines Staubsammelbehälters in einer definierten vorbestimmten Position an dem Basisteil befindet. In dieser vorbestimmten Position ist der exakte Abstand zwischen Schallsender und Schallempfänger bekannt und eine in dieser Parkposition stattfindende Abstandsmessung kann als Referenz für die Kalibriereinrichtungen dienen. Aus dem vorbekannten Abstand von Schallsender und Schallempfänger und der gemessenen aktuellen Laufzeit für das Schallsignal kann eine exakte lokale Schallgeschwindigkeit berechnet werden, die dann in einer Auswerteinheit als Referenz- Schallgeschwindigkeit abgespeichert und bei den weiteren Abstandsmessungen als tatsächliche Schallgeschwindigkeit herangezogen wird.

Durch diese Art der Kalibrierung kann nicht nur die exakte lokale Schallgeschwindigkeit bestimmt werden, sondern auch die Sende- und Empfangssensoren auf ordnungsgemäße Funktion überprüft werden. Liegt die in der Parkposition gemessene Schall-Laufzeit außerhalb eines vorbestimmten Toleranzbereiches, so muss von einem Defekt bei den Sende- oder Empfangssensoren ausgegangen werden.

Die Raumorientierung des Mobilteils relativ zum Basisteil soll bestimmbar sein, wodurch auch eine Ausrichtung des Mobilteils relativ zu seiner Fahrtrichtung möglich wird. Eine tangentiale Ausrichtung des Mobilteils zu einem Schallsignal-Sender am Basisteil wird erreicht, wen der zeitliche Abstand zweier im Abstand zueinander angeordneter Schallsignal-Empfänger am Mobilteil gleich groß ist. Eine radiale Ausrichtung des Mobilteils zu einem Schallsignal-Sender am Basisteil wird erreicht, wen der zeitliche Abstand eines von zwei im Abstand zueinander angeordneter Schallsignal-Empfänger am Mobilteil am größten und eines am kleinsten ist.

In insbesondere diesen Fällen ist es sinnvoll, wenn das Mobilteil zu seiner Lagebestimmung einen Drehlagesensor aufweist.

Der Drehlagesensor kann ein piezoelektrisches Gyroskop oder ein mechanischer Kreiselkompass sein. Alternativ oder ergänzend kann der Drehlagesensor Traktionsabnehmer für die Antriebsmittel, vorzugsweise für Räder des Mobilteils aufweisen. Wenn das Mobilteil Räder besitzt können Odometriedaten des oder der Räder ausgewertet und dadurch die relative Orientierung des Mobilteils bestimmt werden. Alternativ oder ergänzend können Signale eines Gyroskops oder von Beschleunigungssensoren ausgewertet und für die Navigation des Mobilteils herangezogen werden. Bei Nutzung von Signalen von Beschleunigungssensoren kann es sinnvoll sein eine zusätzliche Kalibrierung durchzuführen, um die sich bei Beschleunigungssensoren addierenden Meßfehler auszugleichen.

Das Flächenbearbeitungssystem kann eine Fahrsteuerung aufweisen, durch die das Mobilteil kreissektorweise über die Fläche navigierbar ist. Vorzugsweise ist die Fahrsteuerung zum Navigieren des Mobilteils entlang der Kreissektorgrenzen ausgebildet.

Zur Bestimmung der Position des Mobilteils innerhalb eines Kreissektors der Fläche kann die Fahrsteuerung eine Abstandsbestimmungsvorrichtung aufweisen, welche zur Messung des Abstands von Mobilteil und Basisteil mittels einer Schall- Laufzeitmessung betreibbar ist.

Die Fahrsteuerung kann zum Navigieren des Mobilteils entlang eines spiralförmigen Fahrweges ausgebildet sein.

Zur Verbesserung der Navigation des Mobilteils in Räumen, die Hindernisse aufweisen, wie z.B. Wohnräume in denen beispielsweise Stühle, Tische und Betten vorhanden sind, kann die Fahrsteuerung einen Datenspeicher aufweisen, in dem der Abstand zum Basisteil und/oder das jeweilige Kreissegment eines durch das Mobilteil aufgefundene Hindernisse speicherbar ist.

In einer einfachen Ausgestaltung kann das Hindernisse durch Anfahren des Mobilteils an das Hindernis auffindbar sein.

Um außerdem Störeinflüsse aus Fremdlichtquellen oder aus fremden Geräuschen auszuschließen, kann der mindestens eine Lichtsignal-Sender und/oder der mindestens eine Schallsignal-Sender zum frequenz- oder amplitudenmodulierten oder digitalcodierten Senden ausgebildet sind. Die jeweiligen Lichtsignal- Empfänger und/oder Schallsignal-Empfänger sind auf die frequenz- oder amplitudenmodulierten oder digitalcodierten Sender abgestimmt und reagieren nur auf diese bestimmte Modulierung bzw. Codierung. Dies ermöglicht insbesondere auch den Einsatz mehrerer mobiler Einheiten in dem selben Raum vorzugsweise wenn sich mehrere mobile Einheiten eine gemeinsame Basisstation teilen.

Das Flächenbearbeitungssystem kann zur Feststellung einer direkten Signalübertagung zwischen Schallsignal-Sender und Schallsignal-Empfänger eine Auswerteinheit aufweisen, durch die eine wesentliche Signalabschwächung an dem mindestens einen Lichtsignal-Empfänger auswertbar ist. Die Schallwellen werden nämlich an Gegenständen mehr oder weniger stark reflektiert, so dass in bestimmten Fällen zu erwarten ist, dass das selbe Schallsignal vom zugeordneten Schallsignal-Empfänger mehrfach hintereinander empfangen wird. Zur Auswertung darf jedoch nur das erste empfangene Schallsignal herangezogen werden, da nur die direkte und damit die schnellste Übertragung der Schallsignale ein Maß für die kürzeste Verbindung und damit für den Abstand zwischen Basisteil und Mobilteil sein kann. Als weiteres Kriterium, um nicht direkt empfangene Schallsignale, d. h. reflektierte Schallsignale ausschließen zu können, kann der Empfang des Lichtsignals herangezogen werden. Wenn nämlich kein Lichtsignal bzw. nur ein sehr stark abgeschwächtes Lichtsignal vom Mobilteil empfangen wird, so befindet sich das Mobilteil in einem Schattenbereich, der weder von Licht noch von Schallsignalen auf direktem Weg erreichbar ist. Ein sehr stark abgeschwächtes, bzw. ein nicht vorhandenes Lichtsignal ist damit ein Entscheidungskriterium dafür, dass ein direkter Schallsignal-Empfang nicht möglich ist. Dabei kann eine Intensitätsschwelle für das empfangene Lichtsignal vorgesehen werden, um reflektiertes Licht ausschließen zu können. Insgesamt ist also eine Auswertung der Lichtsignal-Abschwächung dahingehend möglich, dass nur im direkten Sichtbereich zwischen Basisteil und Mobilteil eine Schall-Laufzeit-Messung sinnvoll ist und im Schattenbereich die Schall-Laufzeit-Messung nicht für die Navigation des Mobilteils herangezogen werden kann. Trotzdem ist nach oben beschriebener Methode der Abstandsbestimmung mittels Schall-Laufzeit-Messung eine Navigation des Mobilteils möglich. Im Schattenbereich kann das Mobilteil ohne geplanter Bahnvorgabe nach dem Zufallsprinzip fahrgesteuert werden.

Um das Flächenbearbeitungssystem auch in Schattenbereichen des einen Basisteils navigieren zu können, kann mindestens ein zweites Basisteil zum Aussenden und/oder Empfangen von Schall- und/oder Lichtsignalen in Schattenbereiche des ersten Basisteils als Hilfssender vorgesehen sein.

Vorteilhafter Weise kann das mindestens eine zusätzliche Basisteil und das Mobilteil bzw. mehrere Basisteile untereinander über Funk miteinander verbunden sein.

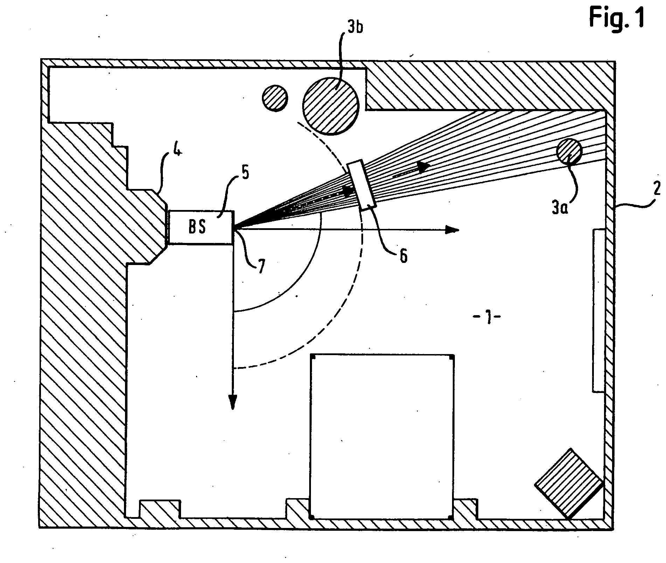

Die Erfindung ist im Folgenden anhand der Figuren 1 bis 8 am Beispiel eines Flächenbearbeitungssystems, das einen in einem Wohnraum selbstfahrenden Reinigungsroboter aufweist, näher erläutert.

Bei allen aufgezeigten Ausführungen kann das Basisteil bzw. die Signal-Sender in eine für das Aufladen von Batterien bzw. Akkumulatoren des Mobilteils und/oder für das Abladen von aufgesammeltem Staub vorgesehene Basisstation integriert sein. Für Mobilteile, die auch ohne eine solche Basisstation genutzt werden, können die Signal- Sender in gesonderte Gehäuse integriert sein, die beispielsweise als Steckmodule zur elektrischen Kontaktierung und zur mechanischen Halterung in Netzstecker einsteckbar sind.

Es zeigen:
- Fig. 1: einen schematischen Grundriss eines Raumes in dem ein erfindungsgemäßes Flächenbearbeitungssystem vorhanden ist;
- Fig. 2: eine schematische Darstellung der Steuerungskomponenten für das erfindungsgemäße Flächenbearbeitungssystem;
- Fig. 3a, b: eine schematische Darstellung des zeitlichen Ablaufs der gesendeten Licht- und Schallsignale;
- Fig. 4: eine ersten Variante einer Fahrstrategie für das Mobilteil;
- Fig. 5a, b: ein kodiertes Feld aus Kreissegmenten, in dem das Mobilteil navigierbar ist;
- Fig. 6a: ein kodiertes Feld aus Dreieckssegmenten;
- Fig. 6b: ein kodiertes Feld aus Teilkreisen;
- Fig. 7: eine zweite Variante einer Fahrstrategie für das Mobilteil;
- Fig. 8a: einen Signalsender mit rotierendem Abblendkörper im Querschnitt;
- Fig. 8b: einen Signalsender im Querschnitt, bei dem der rotierende Abblendkörper durch einen Reflektor bzw. einen Spiegel ersetzt ist, und
- Fig. 8c: einen Signalsender, der aus einer Anzahl einzeln kodierter Sendedioden besteht, im Querschnitt.

Ein in Figur 1 schematisch im Grundriss dargestellter Wohnraum 1 ist von Wänden 2 begrenzt. Der Wohnraum 1 enthält eine Anzahl von Einrichtungsgegenständen, die Zusammenhang mit dem Flächenbearbeitungssystem als beispielhafte Hindernisse 3a und 3b bezeichnet sind. An einer Seitenwand 4 des Wohnraumes 1 ist ein Basisteil 5 aufgestellt. Ein selbstfahrendes Mobilteil 6 ist dem Basisteil 5 zugeordnet und kann sich autonom im Wohnraum 1 über die Bodenflächen bewegen, um diese zu reinigen. Ausgehend von einem am Basisteil 5 befindlichen Ursprung 7 spannt sich zur Bestimmung der momentanen Position des Mobilteils 6 ein gedachtes Koordinatensystem in den Wohnraum 1. Das selbstfahrende Mobilteil 6 steht über Licht-, Schall-, und optional Funksignale mit dem Basisteil 5 in Verbindung.

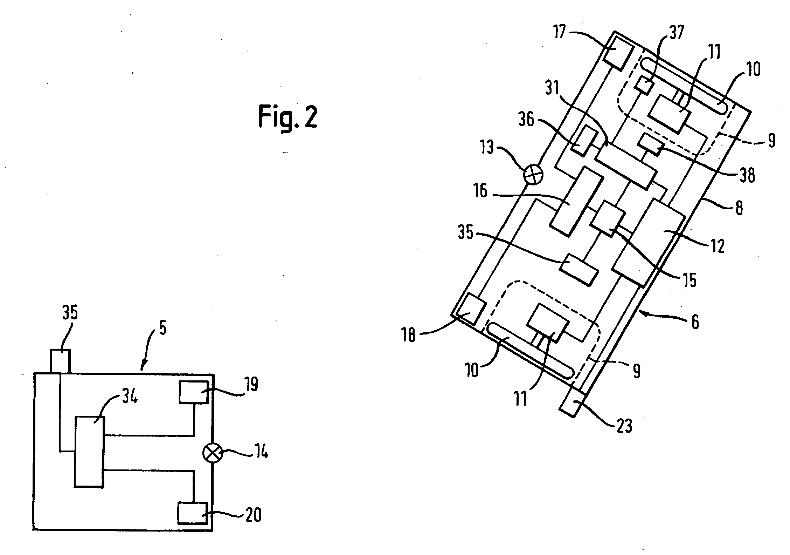

Die erforderlichen Steuerungskomponenten für das Basisteil 5 und das Mobilteil 6 sind in Figur 2 schematisch dargestellt. Das Mobilteil 6 weist ein Gehäuse 8 auf, in dem die Antriebsmittel 9 untergebracht sind. Die Antriebsmittel 9 weisen drehbar gelagerte Räder 10 auf, die über einen elektrischen Motor 11 drehantreibbar sind. Die Motoren 11 sind mit einer elektronischen Fahrsteuerung 12 verbunden, in der eine geeignete Navigationsstrategie programmtechnisch hinterlegt ist. Zur Bestimmung des Abstandes eines mobilen Bezugspunktes 13 am Mobilteil 6 zu einem festen Bezugspunkt 14 (Ursprung 7) am Basisteil 4 ist die Fahrsteuerung 12 mit einer Abstandsbestimmungsvorrichtung 15 verbunden. Die Abstandsbestimmungsvorrichtung 15 errechnet den Abstand zwischen mobilem Bezugspunkt 13 und dem festen Bezugspunkt 14 des Basisteils 4. Dazu ist der Abstandsbestimmungsvorrichtung 15 ein Zeitgeber 16 zugeordnet. An den Zeitgeber 16 sind ein Lichtsignal-Empfänger 17 und ein Schallsignal-Empfänger 18 angeschlossen.

Der Lichtsignal-Empfänger 17 dient dazu, ein von dem Basisteil 5 von einem Lichtsignal-Sender 19 ausgesandtes Lichtsignal zu detektieren. Der Schallsignal- Empfänger 18 dient dazu, ein von dem Basisteil 5 von einem Schallsignal-Sender 20 ausgesandtes Schallsignal zu detektieren. Zur Ansteuerung des Lichtsignal-Senders 19 und des Schallsignal-Senders 20 weist das Basisteil 5 eine Sendesteuerung 21 auf. In einer Ausgestaltung ist die Sendesteuerung 21 über eine am Basisteil 5 angebrachte erste Antenne 22 und über eine am Mobilteil 6 angebrachte zweite Antenne 23 zum Austausch von Informationen über Funk verbunden. Der von der Abstandsbestimmungsvorrichtung 15 aus der vom Zeitgeber 16 übermittelten Schall-Laufzeit ermittelte Abstand A wird einer Auswerteinheit 31 zugeführt, welche die Daten für eine kartografische Auswertung in einem Datenspeicher 38 ablegt und zur Navigation des Mobilteils 6 an die Fahrsteuerung 12 weitergibt. Zur Verbesserung der Positionsbestimmung ist an die Auswerteinheit 31 ein Drehlagesensor 36 angeschlossen, der die Winkellage des Mobilteils 6 im Raum feststellen kann. Alternativ oder ergänzend kann an die Auswerteinheit 31 ein Traktionsabnehmer 37 angeschlossen sein. Des Weiteren kann eine mit einer Kalibriereinrichtung 35 verbundene Steuerungseinheit 34, wie in Figur 2a Basisteil 5 dargestellt, vorgesehen sein.

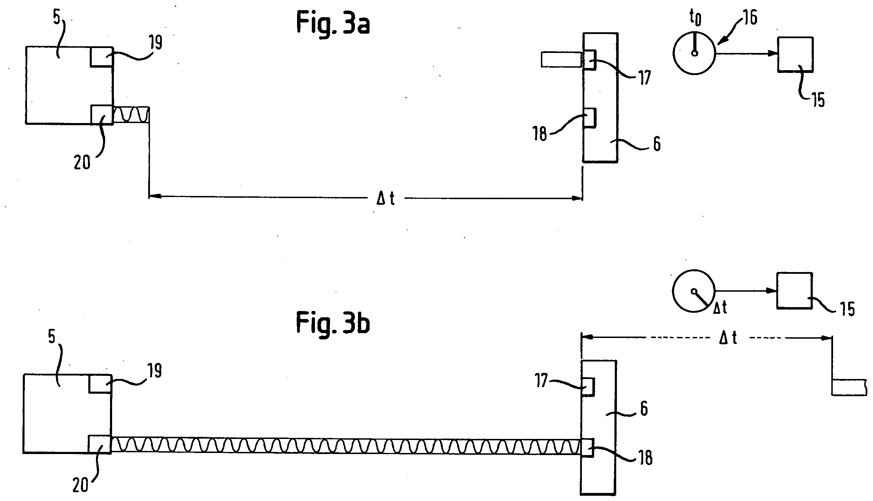

Die Fig. 3a zeigt ein erfindungsgemäßes Flächenbearbeitungssystem, dessen Basis 5 den Schallsignal-Sender 20 und den Lichtsignal-Sender 19 aufweist. Das Mobilteil 6 weist den Schallsignal-Empfänger 18 und den Lichtsignal-Empfänger 17 auf. Der am Basisteil 5 vorgesehene Lichtsignal-Sender 19 sendet zum Zeitpunkt to ein Lichtsignal und ein Schall-Signal aus. Das Lichtsignal wird im Rahmen der Erfindung nahezu gleichzeitig mit dem Aussenden von dem Lichtsignal-Empfänger 17 wahrgenommen und der schematisch dargestellte Zeitgeber 16 gestartet. Am Basisteil 5 wird vorzugsweise zeitgleich mit dem Aussenden des Lichtsignals ein Schallsignal über den Schallsignal-Sender 20 ausgesendet. Da die Schall-Laufzeit wesentlich geringer als die Lichtgeschwindigkeit ist, erreicht das Schallsignal das Mobilteil 6 später als das Lichtsignal und zwar mit einer Verzögerung Δt. Mit dem Moment in dem der Schallsignal-Empfänger 18 das Schallsignal wahrgenommen wird (Fig. 3b), hält der Zeitgeber 16 die Zeitmessung an und übergibt das Messergebnis (Δt) an die Abstandsbestimmungsvorrichtung 15. Die Abstandsbestimmungsvorrichtung 15 ermittelt in Abhängigkeit der geometrischen und konstruktiven Randbedingungen einen Abstand A des mobilen Bezugspunktes 13 am Mobilteil 6 von dem festen Bezugspunktes 14 des Basisteils 5.

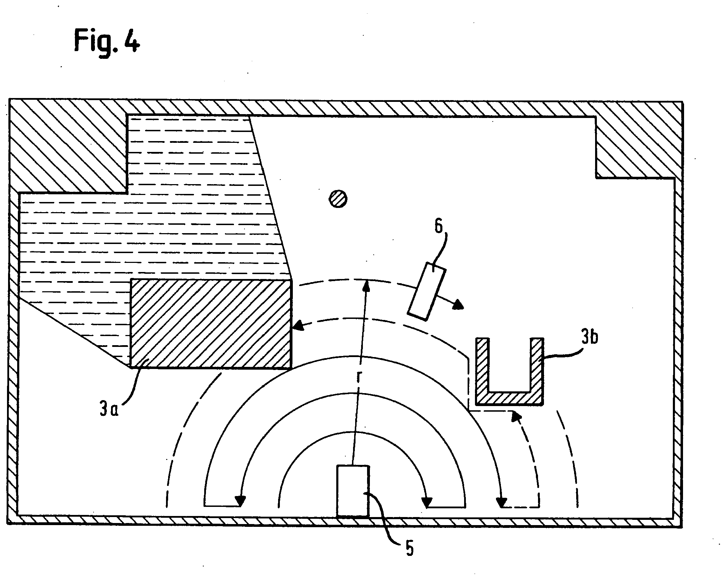

Eine einfache Navigation des Mobilteils 6 wird beispielsweise wie in Figur 4 dargestellt, dadurch ermöglicht, dass die Fahrsteuerung 12 das Mobilteil 6 unter Einhaltung eines festen Abstands A bzw. Radius r auf einer Kreisbahn um das Basisteil 5 bewegen lässt, entweder bis das Mobilteil 6 an einem Hindernis anstößt, oder bis der Drehlagesensor eine Drehung bis maximal 360° für das Mobilteil 6 ermittelt hat. Nachdem das Basisteil 5 z.B. einmal umrundet bzw. der Kreisbogenabschnitt zwischen zwei Hindernissen 3a und 3b abgefahren wurde, wird ein anderer bspw. größerer Radius r als ein Sollwert vorgegeben. Das Mobilteil 6 bewegt sich dann auf einem größerem Radius r mit einem entsprechend größerem Abstand A auf einer Kreisbahn um das Basisteil 5. Das Mobilteil 6 kann sich aber auch spiralförmig um das Basisteil 5 bewegen, wobei die Drehung des Mobilteils wesentlich mehr als 360° beträgt, d. h. vorzugsweise ein Vielfaches davon ist.

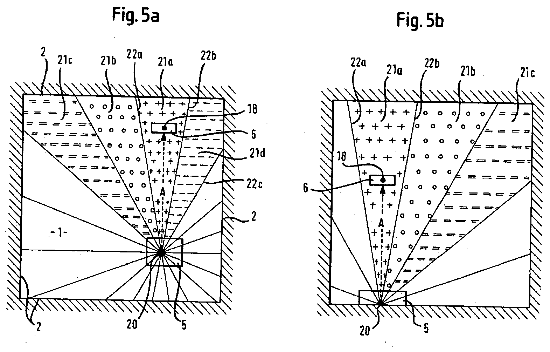

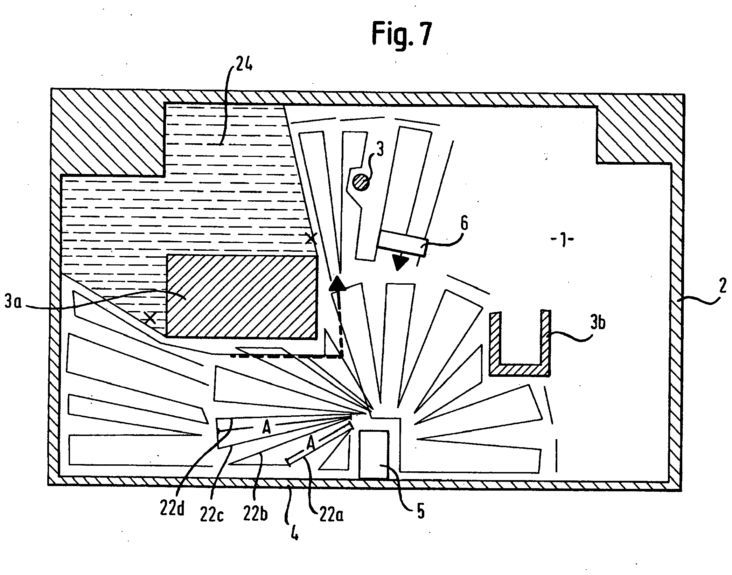

Zur Verbesserung der Navigation des Mobilteils 6 ist der Schallsignal-Sender 20 zum Unterteilen der Fläche 21 in Flächenabschnitte 21a, 21b, 21c kodiert. Wie in Figur 5a dargestellt, kann der Schallsignal-Sender 20 an einem Basisteil 5 angeordnet sein, das sich in dem Wohnraum 1 in einem Abstand von den Wänden 2 befindet. Der Schallsignal-Sender 20 sendet über einen Winkel von insgesamt 360° in alle Richtungen ab, wobei die abgestrahlten Schallsignale kreissegmentweise kodiert sind. In jedem Flächenabschnitt 21a, 21b, 21c weist das ausgesandte Schallsignal eine andere Kodierung auf. In Figur 5a sind die unterschiedlichen Kodierungen durch entsprechend unterschiedliche Schraffuren (=, o, +, -) der Flächenabschnitt 21a, 21b, 21c kenntlich gemacht. Auf Grund der Kodierung des ausgesendeten Schallsignals kann ein am Mobilteil 6 vorgesehener Schallsignal-Empfänger 18 das kodierte Schallsignal aufnehmen und daraus ableiten, in welchem Kreissegment 21a, 21b, 21c das Mobilteil 6 sich derzeit befindet. Das empfangene Schallsignal kann auch zur Bestimmung des Abstandes A von Mobilteil 6 zu Basisteil 5 herangezogen werden. Eine mögliche Fahrstrategie wäre es, wenn das Mobilteil 6 sich einen Weg sucht, entlang dem die Kodierung bei stetig zunehmendem Abstand A ständig wechselt. Das Mobilteil 6 befindet sich dabei auf einem Weg entlang der Grenzlinie 22a zwischen zwei Kreissegmenten 21a, 21b bei stetig zunehmendem Abstand A auf einer Radiusbahn ausgehend vom Zentrum des Basisteils 5 nach außen in Richtung auf die Wand 2 zu. Wenn das Mobilteil 6 die Wand 2 oder bspw. ein Hindernis 3 (wie später in Figur 7 gezeigt) erreicht hat, bewegt sich das Mobilteile entlang eines konstanten Abstandes A zum Basisteil 5 entweder in oder entgegen dem Uhrzeigersinn parallel zur Wand 2, bis eine folgende Grenzlinie 22b erreicht ist. Das Mobilteil 6 sucht sich nun einen Weg entlang dem die Kodierung bei stetig abnehmendem Abstand A ständig wechselt. Das Mobilteil 6 befindet sich dabei auf einem Weg entlang der Grenzlinie 22b zwischen den zwei Kreissegmenten 21a und 21d bei stetig abnehmendem Abstand A auf einer Radiusbahn ausgehend von der Wand 2 nach innen in Richtung auf das Zentrum des Basisteils 5 zu. Unmittelbar in Nähe des Basisteils 5 sucht sich das Mobilteil 6 die nächstliegende Grenzlinie 22c, um seinen Weg auf einer Radiusbahn ausgehend vom Zentrum des Basisteils 5 nach außen in Richtung auf die Wand 2 zu fortzusetzen.

Dieser Fahrvorgang wiederholt sich für jedes Kreissegment, so dass das Mobilteil 6 sich schrittweise um das gesamte Basisteil 5 herum bewegt.

Eine ähnliche Fahrstrategie ist anwendbar, wenn das Basisteil 5 direkt an einer Wand 2 des Wohnraumes 1 vorgesehen ist. Ein solche, wie in Figur 5b dargestellte Lage für das Basisteil 5, ergibt jedoch bei gleicher Kreissegmentgröße wie in Figur 5a eine geringere Auflösung, da die Kreissegmente 21a, 21b, 21c mit zunehmendem Abstand A von dem Basisteil 5 sich stark verbreitern. Die in den Figuren 5a und 5b dargestellten Kreissegmente 21a, 21b, 21c sind unter Verwendung lediglich eines einzigen Schallsignal-Senders 20 erzeugbar. Zur Ausbildung alternativer Flächenabschnitte 21a, 21b, 21c können auch eine Anzahl von mehreren Schallsignal-Sendern 20a, 20b, 20c, 20d, 20e im Wohnraum 1 vorgesehen sein. Mit zunehmender Anzahl der Schallsignal-Sender 20a, 20b, 20c, 20d, 20e verringert sich die Größe der jeweiligen Flächenabschnitte, so dass sich die Genauigkeit der Navigation des Mobilteils 6 erhöht.

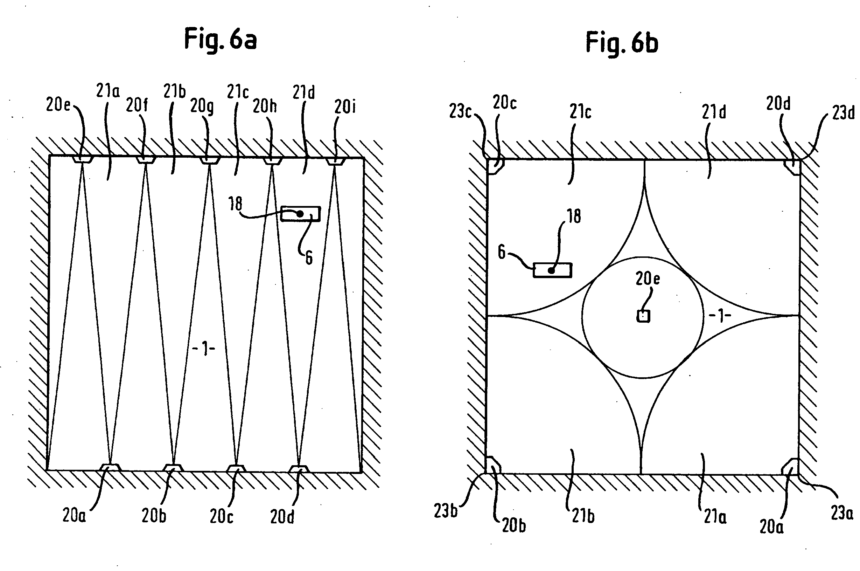

Beispielsweise können wie in Figur 6a dargestellt an gegenüberliegenden Wänden 2 je eine Reihe von Schallsignal-Sendern 20a, 20b, 20c, 20d, 20e versetzt zueinander angeordnet sein. Durch diese Anordnung wird der Wohnraum 1 in eine Vielzahl von Dreieckssegmenten 21a, 21b, 21c, 21d aufgeteilt. Ein weiteres Beispiel ist in Figur 6b dargestellt, bei dem in jeder Raumecke 23a, 23b, 23c, 23d ein Schallsignal-Sender 20a, 20b, 20c, 20d und im Zentrum des Wohnraumes 1 ein weiterer Schallsignal-Sender 20e angeordnet ist.

Eine zweite Variante einer Fahrstrategie für das Mobilteil ist in Figur 7 aufgezeigt. Ausgehend von einem Basisteil 5 bewegt sich das Mobilteil 6 entlang einer Grenzlinie 22a auf einem Radius von dem Basisteil 5 weg, bis es einen bestimmten maximalen Abstand A erreicht hat. Wenn das Mobilteil 6 vor Erreichen des maximalen Abstands A an eine Seitenwand 4 des Wohnraumes 1 stößt, so bewegt sich das Mobilteil 6 unmittelbar auf einem festen Radius im Urzeigersinn um das Basisteil 5, bis es die folgende Grenzlinie 22b erreicht. Anschließend bewegt sich das Mobilteil 6 auf der Grenzlinie 22b unter stetiger Verringerung des Abstandes A auf das Basisteil 5 zu.

Wenn das Mobilteil 6 das Basisteil 5 erreicht hat bewegt es sich wiederum auf einem festen Radius im Urzeigersinn um das Basisteil 5, bis es die folgende Grenzlinie 22c erreicht hat. Wiederum bewegt sich das Mobilteil 6 entlang einer Grenzlinie 22c auf einem Radius von dem Basisteil 5 weg, bis es einen bestimmten maximalen Abstand A erreicht hat, um sich dann wieder auf dem konstanten Radius A im Uhrzeigersinn auf die folgende Grenzlinie 22 d zu bewegen. Die Positionen von durch Kollision erkannte Hindernisse 3a, 3b können mittels der Daten von betroffenem kodiertem Kreissektor und dem Kollisionsabstand von dem Basisteil genau lokalisiert und vorzugsweise gespeichert werden. Dabei kann nicht nur das Hindernis selbst, sondern auch ein sich hinter dem Hindernis befindlicher Schattenbereich 24 bestimmt und gespeichert werden. Für die Navigation des Mobilteils 6 ist dann der Schattenbereich 24 bekannt und je nach Fahrsteuerung kann dieser Schattenbereich 24 von dem Mobilteil 6 ausgelassen, also nicht angefahren werden oder in diesem Schattenbereich 24 eine nach dem Zufallsprinzip arbeitende Fahrstrategie angewandt werden. Nach Überstreichen eines vollen Winkelbereichs um das Basisteil 5, hier 180° wiederholt sich die soeben beschriebene Fahrstrategie auf einem Radiusbereich zwischen dem minimalen Abstand A und einem maximalen Abstand, der im vorliegenden Beispiel doppelt so groß ist wie der Abstand A.

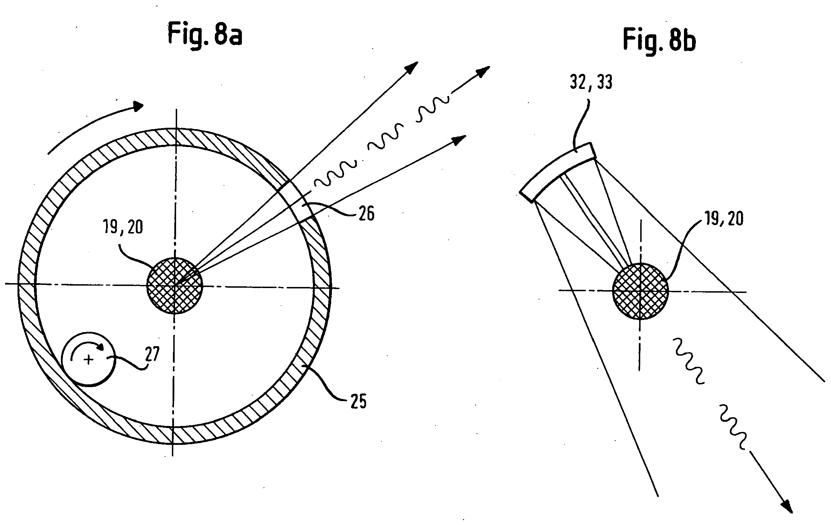

Die Fig. 8a zeigt einen Signalsender mit rotierendem Abblendkörper im Querschnitt. Der einzige Signal-Sender 19 bzw. 20 befindet sich im Zentrum der Rotationsachse eines hohlzylindrischen Abblendkörpers 25. Der Abblendkörper 25 rotiert um den Signal-Sender 19 bzw. 20 und weist einen vorzugsweise als parallel zur Rotationsachse sich längserstreckender Spalt 26 auf. Der Abblendkörper 25 ist mittels eines Schrittmotors 27 drehangetrieben.

Alternativ zu Fig. 8a kann, wie in Fig. 8b dargestellt der rotierende hohlzylindrische Abblendkörper 25 durch einen um den Signal-Sender 19 bzw. 20 umlaufenden Reflektor 32 oder Spiegel 33 ersetzt sein.

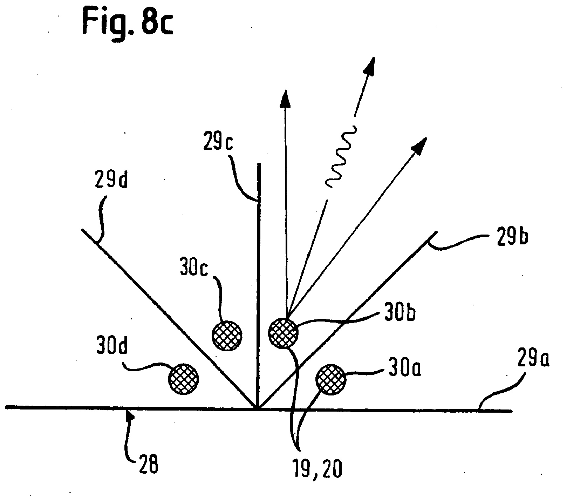

Die Fig. 8c zeigt einen Signalsender 19 bzw. 20, der aus einer Anzahl einzeln kodierter Sendedioden 30a, 30b, 30c, 30d besteht, im Querschnitt. Jede der Sendedioden 30a, 30b, 30c, 30d weist vorzugsweise Richtcharakteristik auf und ist in jeweils einem Sektor eines Formkörpers 28 angeordnet. Der Formkörper 28 weis in diesem Beispiel Trennwände 29 auf, die den Formköper 28 in Kreissegmentzellen unterteilt. Jede Trennwand 29 ist für die von den Sendedioden 30a, 30b, 30c, 30d ausgesandten Signale reflektierend ausgebildet. Jede Sendediode 30a, 30b, 30c, 30d sendet Signale in unterschiedlicher Kodierung aus. Sowohl die Sendedioden 30a, 30b, 30c, 30d als auch der Formkörper sind vorzugsweise fest am Signalsender 19 bzw. 20 angebracht.

## Patentansprüche

1. Flächenbearbeitungssystem mit einem durch Antriebsmittel (9) selbstfahrenden Mobilteil (6), das in einer Fläche (21) navigierbar ist und mit mindestens einem feststehenden Basisteil (5), das mindestens einen Signalsender (19,20) aufweist, dessen ausgesendete Signale zum Unterteilen der Fläche in Flächenabschnitte ausgebildet und von mindestens einem am Mobilteil (6) vorgesehenen zugeordneten Signalempfänger (17, 18) aufnehmbar ist, wobei die ausgesendeten Signale den Flächenabschnitten entsprechend kodiert sind, und die vom Mobilteil (6) empfangenen kodierten Signale Eingangsgrößen einer Auswerteinheit (31) zur Bestimmung der Position des Mobilteils (6) in der Fläche (21) sind, **dadurch gekennzeichnet, dass** ein Signalsender (19, 20) zum Senden eines in Abhängigkeit einer einstellbaren Senderichtung unterschiedlich kodierten Signals ausgebildet ist und zum Einstellen der Senderichtung einen zugeordneten, über einen Betriebswinkel schwenkbaren Abblendkörper (25) aufweist.

2. Flächenbearbeitungssystem nach Anspruch 1, **dadurch gekennzeichnet, dass** die ausgesendeten Signale in Abhängigkeit ihrer Senderichtung kodiert sind.

3. Flächenbearbeitungssystem nach Anspruch 2, **dadurch gekennzeichnet, dass** die ausgesendeten Signale zum Unterteilen der Fläche (21) in Kreissektoren kodiert sind.

4. Flächenbearbeitungssystem nach Anspruch 3, **dadurch gekennzeichnet, dass** die ausgesendeten Signale zum Unterteilen der Fläche (21) in Kreissektoren mit einem Winkel zwischen 20° und 0,1° kodiert sind.

5. Flächenbearbeitungssystem nach einem der Ansprüche 1 bis 4, **dadurch gekennzeichnet, dass** der mindestens eine Signalsender zum frequenz- oder amplitudenmodulierten oder digitalkodierten Senden ausgebildet ist.

6. Flächenbearbeitungssystem nach einem der Ansprüche 1 bis 5, **dadurch gekennzeichnet, dass** mehrere Signalsender (19a, 19b, 19c, 19d) zum Senden verschieden kodierter Signale in unterschiedliche Richtungen vorgesehen sind.

7. Flächenbearbeitungssystem nach Anspruch 1 bis 6, **dadurch gekennzeichnet, dass** der Signalsender (19, 20) Richtcharakeristik besitzt und zum Einstellen der Senderichtung schwenkbar um den Betriebswinkel am Basisteil (5) gelagert ist.

8. Flächenbearbeitungssystem nach einem der Ansprüche 6 oder 7, **dadurch gekennzeichnet, dass** der Signalsender (19, 20) zum im wesentlichen gleichmäßigen Senden über seinen Betriebswinkel ausgebildet ist und zum Einstellen der Senderichtung einen zugeordneten, über den Betriebswinkel schwenkbaren Reflektor (32) oder Spiegel (33) aufweist.

9. Flächenbearbeitungssystem nach einem der Ansprüche 6 bis 8, **dadurch gekennzeichnet, dass** der Signalsender (19, 20) zum im wesentlichen gleichmäßigen Senden über seinen Betriebswinkel ausgebildet ist.

10. Flächenbearbeitungssystem nach Anspruch 9, **dadurch gekennzeichnet, dass** der Abblendkörper (25) als ein den Signalsender (19, 20) im wesentlichen signalundurchlässig umgebender Hohlkörper ausgebildet ist, der zum Aussenden eines Signals in einen Kreissektor einen signaldurchlässigen Durchtritt (26) aufweist.

11. Flächenbearbeitungssystem nach Anspruch 10, **dadurch gekennzeichnet, dass** der signaldurchlässige Durchtritt (26) als senkrechter Schlitz im schwenkbaren Abblendkörper (25) ausgebildet ist.

12. Flächenbearbeitungssystem nach einem der Ansprüche 7 bis 11, **dadurch gekennzeichnet, dass** der Signalsender (19, 20) bzw. der Abblendkörper (25) zum oszillierenden Schwenken um den Betriebswinkel in einer Frequenz zwischen 0,1 bis 100 Hertz ausgebildet ist.

13. Flächenbearbeitungssystem nach einem der Ansprüche 7 bis 12, **dadurch gekennzeichnet, dass** der Signalsender (19, 20) bzw. der Abblendkörper (25) mittels eines Schrittmotors (27), insbesondere eines Piezomotors schwenk- bzw. drehbar ist.

14. Flächenbearbeitungssystem nach einem der Ansprüche 1 bis 13, **dadurch gekennzeichnet, dass** der mindestens eine Signalsender (19a, 19b, 19c, 19d) ein Lichtsignalsender ist, der vorzugsweise zum Senden im Infrarot-Bereich ausgebildet ist.

15. Flächenbearbeitungssystem nach einem der Ansprüche 1 bis 14, **dadurch gekennzeichnet, dass** das mindestens eine Basisteil (5) einen zusätzlichen Schallsignal-Sender (20) aufweist, dessen Schallsignal von einem Schallsignal-Empfänger (18) am Mobilteil (6) empfangbar ist, zur Abstandsbestimmung von Mobilteil (6) zu Basisteil (5) durch Messung der Schall-Laufzeit zwischen Basisteil (5) und Mobilteil (6).

16. Flächenbearbeitungssystem nach Anspruch 15, **dadurch gekennzeichnet, dass** eine Abstandsbestimmungsvorrichtung (15) vorgesehen ist, die mindestens einen Lichtsignal-Sender (19), und mindestens ein Schallsignal-Sender (20) aufweist, welche ausgesendeten Signale von zugeordneten Lichtsignal- und Schallsignal-Empfängern (17, 18) aufnehmbar sind, zum Ansteuern eines Zeitgebers (16), auf dessen Grundlage die Laufzeit des Schallsignals messbar und zur Bestimmung des Abstandes von Mobilteil (6) und Basisteil (5) unter Berücksichtigung der Schallgeschwindigkeit bestimmbar ist.

17. Flächenbearbeitungssystem nach Anspruch 16, **dadurch gekennzeichnet, dass** der Zeitgeber (16) zur Durchführung einer Laufzeitmessung durch das vom Lichtsignal-Empfänger (17) empfangene Lichtsignal auslösbar und durch das vom Schallsignal-Empfänger (18) empfangene Schallsignal anhaltbar ist und der auf Grundlage der gemessenen Laufzeit bestimmte Abstand von Mobilteil (6) und Basisteil (5) eine Eingangsgröße bildet, die einer Fahrsteuerung (12) für die Antriebsmittel (9) des Mobilteils zuführbar ist.

18. Flächenbearbeitungssystem nach Anspruch 17, **dadurch gekennzeichnet, dass** der mindestens eine Lichtsignal-Sender (19a, 19b, 19c, 19d) und der mindestens eine Schallsignal-Sender (20a, 20b, 20c, 20d) zum zeitversetzten Starten des Aussendens ihre Signale in einem der Auswerteinheit (15) vorgegebenen Zeitabstand ansteuerbar sind.

19. Flächenbearbeitungssystem nach Anspruch 17, **dadurch gekennzeichnet, dass** der mindestens eine Lichtsignal-Sender (19a, 19b, 19c, 19d) und der mindestens eine Schallsignal-Sender (20a, 20b, 20c, 20d) zum zeitgleichen Starten des Aussendens ihre Signale ansteuerbar sind.

20. Flächenbearbeitungssystem nach einem der Ansprüche 16 bis 19, **dadurch gekennzeichnet, dass** die am Mobilteil (6) vorgesehene Auswerteinheit (15) und/oder eine am Basisteil vorgesehene Steuerungseinheit (34) eine Kalibriereinrichtung (35) zur Bestimmung der Schallgeschwindigkeit aufweist.

21. Flächenbearbeitungssystem nach einem der Ansprüche 1 bis 20, **dadurch gekennzeichnet, dass** das Mobilteil (6) zu seiner Lagebestimmung einen Drehlagesensor (36) aufweist.

22. Flächenbearbeitungssystem nach Anspruch 21, **dadurch gekennzeichnet, dass** der Drehlagesensor (36) ein piezoelektrisches Gyroskop oder einen mechanischen Kreiselkompass aufweist.

23. Flächenbearbeitungssystem nach Anspruch 21, **dadurch gekennzeichnet, dass** der Drehlagesensor (36) Traktionsabnehmer (37) für die Antriebsmittel (9), vorzugsweise für Räder (10) des Mobilteils (6) aufweist.

24. Flächenbearbeitungssystem nach einem der Ansprüche 1 bis 23, **dadurch gekennzeichnet, dass** das Flächenbearbeitungssystem eine Fahrsteuerung (12) aufweist, durch die das Mobilteil (6) kreissektorweise über die Fläche (21) navigierbar ist.

25. Flächenbearbeitungssystem nach Anspruch 24, **dadurch gekennzeichnet, dass** die Fahrsteuerung (12) zum Navigieren des Mobilteils (6) entlang der Kreissektorgrenzen ausgebildet ist.

26. Flächenbearbeitungssystem nach einem der Ansprüche 24 oder 25, **dadurch gekennzeichnet, dass** zur Bestimmung der Position des Mobilteils (6) innerhalb eines Kreissektors der Fläche (21) die Fahrsteuerung (12) eine Abstandsbestimmungsvorrichtung (15) aufweist, welche zur Messung des Abstands von Mobilteil (6) und Basisteil (5) mittels einer Schall-Laufzeitmessung betreibbar ist.

27. Flächenbearbeitungssystem nach Anspruch 26, **dadurch gekennzeichnet, dass** die Fahrsteuerung (12) zum Navigieren des Mobilteils (6) entlang eines spiralförmigen Fahrweges ausgebildet ist.

28. Flächenbearbeitungssystem nach einem der Ansprüche 24 bis 27, **dadurch gekennzeichnet, dass** die Fahrsteuerung (12) einen Datenspeicher (38) aufweist, in dem der Abstand zum Basisteil (5) und/oder das jeweilige Kreissegment eines durch das Mobilteil (6) aufgefundene Hindernisse (3a, 3b) speicherbar ist.

29. Flächenbearbeitungssystem nach Anspruch 28, **dadurch gekennzeichnet, dass** das Hindernisse (3a, 3b) durch Anfahren des Mobilteils (6) an das Hindernis (3a, 3b) auffindbar ist.

30. Flächenbearbeitungssystem nach einem der Ansprüche 1 bis 29, **dadurch gekennzeichnet, dass** das Mobilteil (6) ein selbstfahrendes Flächenreinigungsgerät, vorzugsweise ein Saugroboter, ein Feuchtreinigungsroboter, ein Wischroboter, ein Polierroboter oder ein Fenster- bzw. Fliesenreinigungsroboter ist.

## Claims

1. Surface treating system with a mobile part (6) which is self-propelled by means of drive means (9) and which can be navigated in a surface (21) and with at least one stationary base part (5), which has at least one signal transmitter (19, 20), the emitted signals of which are embodied to subdivide the surface into surface segments and can be received by at least one assigned signal receiver (17, 18) provided on the mobile part (6), wherein the emitted signals are encoded in accordance with the surface segments and the encoded signals received by the mobile part (6) are input variables of an evaluation unit (31) for determining the position of the mobile part (6) in the surface (21), **characterised in that** a signal transmitter (19, 20) is embodied to transmit a differently encoded signal, as a function of an adjustable transmit direction, and for setting the transmit direction has an associated fade-out element (25) which can be pivoted by way of an operating angle.

2. Surface treating system according to claim 1, **characterised in that** the emitted signals are encoded as a function of their transmit direction.

3. Surface treating system according to claim 2, **characterised in that** the emitted signals are embodied for subdividing the surface (21) into circular sectors.

4. Surface treating system according to claim 3, **characterised in that** the emitted signals are encoded to subdivide the surface (21) into circular sectors with an angle between 20° and 0.1°.

5. Surface treating system according to one of claims 1 to 4, **characterised in that** the at least one signal transmitter is embodied for frequency or amplitude-modulated or digitally encoded transmission.

6. Surface treating system according to one of claims 1 to 5, **characterised in that** a number of signal transmitters (19a, 19b, 19c, 19d) are provided for transmitting differently encoded signals in different directions.

7. Surface treating system according to claim 1 or 6, **characterised in that** the signal transmitter (19, 20) has directional characteristics and is pivotably supported about the operating angle on the base part (5) for setting the transmit direction.

8. Surface treating system according to one of claims 6 or 7, **characterised in that** the signal transmitter (19, 20) is embodied to substantially uniformly transmit by way of its operating angle, and has an assigned reflector (32) or mirror (33) which can be pivoted about the operating angle for setting the transmit direction.

9. Surface treating system according to one of claims 6 to 8, **characterised in that** the signal transmitter (19, 20) is embodied to substantially uniformly transmit by way of its operating angle.

10. Surface treating system according to claim 9, **characterised in that** the fade-out element (25) is embodied as a hollow element which surrounds the signal transmitter (19, 20) in a substantially signal-impermeable manner, said hollow element having a signal-permeable passage (26) for emitting a signal into a circular sector.

11. Surface treating system according to claim 10, **characterised in that** the signal-permeable passage (26) is embodied as a vertical slot in the pivotable fade-out element (25).

12. Surface treating system according to one of claims 7 to 11, **characterised in that** the signal transmitter (19, 20) or the fade-out element (25) is embodied to pivot in an oscillating manner about the operating angle at a frequency between 0.1 to 100 Hertz.

13. Surface treating system according to one of claims 7 to 12, **characterised in that** the signal transmitter (19, 20) or the fade-out element (25) can be pivoted or rotated by means of a multi-phase motor (27), in particular a piezo motor.

14. Surface treating system according to one of claims 1 to 13, **characterised in that** the at least one signal transmitter (19a, 19b, 19c, 19d) is a light signal transmitter, which is preferably embodied to transmit in the infrared range.

15. Surface treating system according to one of claims 1 to 14, **characterised in that** the at least one base part (5) has an additional sound signal transmitter (20), the sound signal of which can be received by a sound signal receiver (18) on the mobile part (6), for determining the distance between the mobile part (6) and the base part (5) by measuring the sound runtime between the base part (5) and the mobile part (6).

16. Surface treating system according to claim 15, **characterised in that** a distance determining device (15) is provided, which has at least one light signal transmitter (19) and at least one sound signal transmitter (20), which emitted signals can be received by the assigned light signal and sound signal receivers (17, 18), for activating a timer (16), on the basis of which the runtime of the sound signal can be measured and for determining the distance between the mobile part (6) and the base part (5) can be determined by taking the speed of sound into account.

17. Surface treating system according to claim 16, **characterised in that** the timer (16) for carrying out a runtime measurement can be triggered by the light signal received by the light signal receiver (17) and can be stopped by the sound signal received by the sound signal receiver (18) and the distance determined on the basis of the measured runtime between the mobile part (6) and the base part (5) forms an input variable, which can be fed to a drive control (12) for the drive means (9) of the mobile part.

18. Surface treating system according to claim 17, **characterised in that** the at least one light signal transmitter (19a, 19b, 19c, 19d) and the at least one sound signal transmitter (20a, 20b, 20c, 20d) can be activated for the time-delayed start of emitting its signals in an interval predetermined to the evaluation unit (15).

19. Surface treating system according to claim 17, **characterised in that** the at least one light signal transmitter (19a, 19b, 19c, 19d) and the at least one sound signal transmitter (20a, 20b, 20c, 20d) can be activated to start the emission of their signals at the same time.

20. Surface treating system according to one of claims 16 to 19, **characterised in that** the evaluation unit (15) provided on the mobile part (6) and/or a control unit (34) provided on the base part has a calibration device (35) for determining the sound speed.

21. Surface treating system according to one of claims 1 to 20, **characterised in that** the mobile part (6) has a rotary position sensor (36) for its position determination.

22. Surface treating system according to claim 21, **characterised in that** the rotary position sensor (36) has a piezoelectric gyroscope or a mechanical gyrocompass.

23. Surface treating system according to claim 21, **characterised in that** the rotary position sensor (36) has traction loads (37) for the drive means (9), preferably for wheels (10) of the mobile part (6).

24. Surface treating system according to one of claims 1 to 23, **characterised in that** the surface treating system has a drive control (12), by means of which the mobile part (6) can be navigated across the surface (21) one circular sector at a time.

25. Surface treating system according to claim 24, **characterised in that** the drive control (12) is embodied to navigate the mobile part (6) along the circular sector limits.

26. Surface treating system according to one of claims 24 or 25, **characterised in that** in order to determine the position of the mobile part (6) within a circular sector of the surface (21), the drive control (12) has a distance determining device (15), which can be operated by means of a sound runtime measurement for the purpose of measuring the distance between the mobile part (6) and the base part (5).

27. Surface treating system according to claim 26, **characterised in that** the drive control (12) is embodied to navigate the mobile part (6) along a spiral-shaped route.

28. Surface-treating system according to one of claims 24 to 27, **characterised in that** the drive control (12) has a data storage device (38), in which the distance from the base part (5) and/or the respective circular segment of an obstacle (3a, 3b) found by the mobile part (6) can be stored.

29. Surface treating system according to claim 28, **characterised in that** the obstacles (3a, 3b) can be found by the mobile part (6) approaching the obstacle (3a, 3b).

30. Surface treating system according to one of claims 1 to 29, **characterised in that** the mobile part (6) is a self-propelling surface cleaning device, preferably a suction robot, a wet cleaning robot, a wiping robot, a polishing robot or a window or tile cleaning robot.

## Revendications

1. Système de traitement de surfaces avec une partie mobile (6) automotrice via des moyens d'entraînement (9), navigable dans une surface (21) et avec au moins une partie de base fixe (5), qui présente au moins un émetteur de signaux (19, 20), dont les signaux émis sont exécutés afin de subdiviser la surface en sections de surface et sont recevables par au moins un récepteur de signaux (17, 18) affecté prévu sur la partie mobile (6), dans lequel les signaux émis sont codés selon les sections de surface et les signaux codés reçus par la partie mobile (6) sont des grandeurs d'entrée d'une unité d'évaluation (31) pour la détermination de la position de la partie mobile (6) dans la surface (21), **caractérisé en ce qu'**un émetteur de signaux (19, 20) pour l'émission d'un signal codé différemment en fonction d'un sens d'émission réglable est exécuté et présente, pour le réglage du sens d'émission, un corps de tamisage (25) affecté et pivotant à travers un angle opérationnel.

2. Système de traitement de surfaces selon la revendication 1, **caractérisé en ce que** les signaux émis sont codés en fonction de leur sens d'émission.

3. Système de traitement de surfaces selon la revendication 2, **caractérisé en ce que** les signaux émis sont codés pour la subdivision de la surface (21) en secteurs circulaires.

4. Système de traitement de surfaces selon la revendication 3, **caractérisé en ce que** les signaux émis sont codés pour la subdivision de la surface (21) en secteurs circulaires avec un angle situé entre 20° et 0,1°.

5. Système de traitement de surfaces selon l'une des revendications 1 à 4, **caractérisé en ce que** l'au moins un émetteur de signaux est exécuté pour l'émission à codage numérique, à modulation de fréquence ou d'amplitude.

6. Système de traitement de surfaces selon l'une des revendications 1 à 5, **caractérisé en ce que** plusieurs émetteurs de signaux (19a, 19b, 19c, 19d) pour l'émission de différents signaux codés dans différentes directions sont prévus.

7. Système de traitement de surfaces selon la revendication 1 à 6, **caractérisé en ce que** l'émetteur de signaux (19, 20) possède une caractéristique directionnelle et est logé pour le réglage de la direction d'émission de façon pivotante à travers l'angle opérationnel sur la partie de base (5).

8. Système de traitement de surfaces selon l'une des revendications 6 ou 7, **caractérisé en ce que** l'émetteur de signaux (19, 20) est exécuté pour l'émission essentiellement uniforme sur son angle opérationnel et présente, pour le réglage de la direction d'émission, un réflecteur (32) ou miroir (33) affecté et pivotant à travers l'angle opérationnel.

9. Système de traitement de surfaces selon l'une des revendications 6 à 8, **caractérisé en ce que** l'émetteur de signaux (19, 20) est exécuté pour l'émission essentiellement uniforme à travers son angle opérationnel.

10. Système de traitement de surfaces selon la revendication 9, **caractérisé en ce que** le corps de tamisage (25) est exécuté sous la forme d'un corps creux entourant l'émetteur de signaux (19, 20) de façon essentiellement imperméable aux signaux, lequel corps creux présente, pour l'émission d'un signal dans un secteur circulaire, une traversée (26) perméable aux signaux.

11. Système de traitement de surfaces selon la revendication 10, **caractérisé en ce que** la traversée (26) perméable aux signaux est exécutée sous la forme d'une fente verticale dans le corps de tamisage pivotant (25).

12. Système de traitement de surfaces selon l'une des revendications 7 à 11, **caractérisé en ce que** l'émetteur de signaux (19, 20) resp. le corps de tamisage (25) est exécuté pour le pivotement oscillant à travers l'angle opérationnel et selon une fréquence située entre 0,1 et 100 Hertz.

13. Système de traitement de surfaces selon l'une des revendications 7 à 12, **caractérisé en ce que** l'émetteur de signaux (19, 20) resp. le corps de tamisage (25) est pivotant resp. rotatif au moyen d'un moteur pas à pas (27), en particulier d'un moteur piézo.

14. Système de traitement de surfaces selon l'une des revendications 1 à 13, **caractérisé en ce que** l'au moins un émetteur de signaux (19a, 19b, 19c, 19d) est un émetteur de signaux lumineux, exécuté afin d'émettre de préférence dans la plage infrarouge.

15. Système de traitement de surfaces selon l'une des revendications 1 à 14, **caractérisé en ce que** l'au moins une partie de base (5) présente un émetteur de signaux sonores (20) supplémentaire, dont le signal sonore peut être reçu par un récepteur de signaux sonores (18) sur la partie mobile (6), pour la mesure de l'écartement entre la partie mobile (6) et la partie de base (5) en mesurant la durée de propagation du son entre la partie de base (5) et la partie mobile (6).

16. Système de traitement de surfaces selon la revendication 15, **caractérisé en ce qu'**un dispositif de détermination de l'écartement (15) est prévu, lequel présente au moins un émetteur de signaux lumineux (19) et au moins un émetteur de signaux sonores (20) capables de recevoir les signaux émis par les récepteurs de signaux lumineux et sonores affectés (17, 18), pour le pilotage d'un temporisateur (16) sur la base duquel la durée du signal sonore est mesurable et déterminable pour l'établissement de l'écartement entre la partie mobile (6) et la partie de base (5) en tenant compte de la vitesse de propagation du son.

17. Système de traitement de surfaces selon la revendication 16, **caractérisé en ce que** le temporisateur (16) peut être déclenché pour l'exécution d'une mesure de durée par le signal lumineux reçu par le récepteur de signaux lumineux (17) et arrêté par le signal sonore reçu par le récepteur de signaux sonores (18) et qui constitue, sur la base de la durée mesurée pour un écartement déterminé entre la partie mobile (6) et la partie de base (5), une grandeur d'entrée acheminable vers une commande de roulement (12) pour les moyens d'entraînement (9) de la partie mobile.

18. Système de traitement de surfaces selon la revendication 17, **caractérisé en ce que** l'au moins un émetteur de signaux lumineux (19a, 19b, 19c, 19d) et l'au moins un émetteur de signaux sonores (20a, 20b, 20c, 20d) sont actionnables pour l'entame différée de l'envoi de leurs signaux selon un intervalle de temps préalablement prescrit à l'unité d'évaluation (15).

19. Système de traitement de surfaces selon la revendication 17, **caractérisé en ce que** l'au moins un émetteur de signaux lumineux (19a, 19b, 19c, 19d) et l'au moins un émetteur de signaux sonores (20a, 20b, 20c, 20d) sont actionnables pour l'entame concomitante de l'envoi de leurs signaux.

20. Système de traitement de surfaces selon l'une des revendications 16 à 19, **caractérisé en ce que** l'unité d'évaluation (15) prévue sur la partie mobile (6) et/ou une unité de commande (34) prévue sur la partie de base présente un dispositif de calibrage (35) pour la détermination de la vitesse de propagation du son.

21. Système de traitement de surfaces selon l'une des revendications 1 à 20, **caractérisé en ce que** la partie mobile (6) présente, pour la détermination de sa position, un capteur de position angulaire (36).

22. Système de traitement de surfaces selon la revendication 21, **caractérisé en ce que** le capteur de position angulaire (36) présente un gyroscope piézoélectrique ou un gyrocompas mécanique.

23. Système de traitement de surfaces selon la revendication 21, **caractérisé en ce que** le capteur de position angulaire (36) présente un récepteur de traction (37) pour les moyens d'entraînement (9), de préférence pour les roues (10) de la partie mobile (6).

24. Système de traitement de surfaces selon l'une des revendications 1 à 23, **caractérisé en ce que** le système de traitement de surfaces présente une commande de roulement (12) via laquelle la partie mobile (6) est navigable par secteur circulaire sur la surface (21).

25. Système de traitement de surfaces selon la revendication 24, **caractérisé en ce que** la commande de roulement (12) est exécutée pour la navigation de la partie mobile (6) le long des limites des secteurs circulaires.

26. Système de traitement de surfaces selon l'une des revendications 24 ou 25, **caractérisé en ce que** pour la détermination de la position de la partie mobile (6) au sein d'un secteur circulaire de la surface (21), la commande de roulement (12) présente un dispositif de détermination de l'écartement (15) pouvant être exploité pour la mesure de l'écartement entre la partie mobile (6) et la partie de base (5) au moyen d'une mesure de durée sonore.

27. Système de traitement de surfaces selon la revendication 26, **caractérisé en ce que** la commande de roulement (12) est exécutée pour la navigation de la partie mobile (6) le long d'une voie spiralée.

28. Système de traitement de surfaces selon l'une des revendications 24 à 27, **caractérisé en ce que** la commande de roulement (12) présente une mémoire de données (38) dans laquelle l'écartement par rapport à la partie de base (5) et/ou le segment circulaire respectif d'un obstacle (3a, 3b) rencontré par la partie mobile (6) peut être enregistré.

29. Système de traitement de surfaces selon la revendication 28, **caractérisé en ce que** l'obstacle (3a, 3b) peut être trouvé en déplaçant la partie mobile (6) contre l'obstacle (3a, 3b).

30. Système de traitement de surface selon l'une des revendications 1 à 29, **caractérisé en ce que** la partie mobile (6) est un appareil de nettoyage de sol automoteur, de préférence un robot-aspirateur, un robot de nettoyage humide, un robot de lavage, un robot de polissage ou un robot de nettoyage des fenêtres resp. du carrelage.
